# EUROPEAN PATENT APPLICATION

(11) **EP 3 345 483 A1**
(43) Date of publication of application: **11.07.2018**
(21) Application number: 16840875.5
(22) Date of filing: 30.08.2016
(51) Int. Cl.: A23B 7/154, A23B 7/16, A23L 3/3562, A23P 20/10

(54) **EDIBLE COATING OF FRESHLY PRE-PREPARED POTATOES, METHOD FOR THE APPLICATION THEREOF, AND POTATOES COATED WITH SAME**

(30) Priority: 04.09.2015 ES 201531272
(71) Applicant: Production and Innovation on Edible Coatings S.L., 31110 Noain (Navarra) (ES)
(72) Inventor: ROJAS GRÄU, María Alejandra, 31110 Noáin Navarra (ES); URRUTIA LARRAZ, Raquel, 31110 Noáin Navarra (ES)
(74) Representative: Agasse, Stéphane
(86) International application number: PCT/ES2016/070614
(87) International publication number: WO 2017/037321

(57) **Abstract**

The invention relates to a coating for freshly pre-prepared potatoes, to the method for the application thereof and to the end product of portions of coated and packed potatoes. The coating includes a matrix of modified potato starch, preferably hydroxypropyl distarch phosphate, and anti-browning agents: sodium ascorbate, calcium ascorbate and citric acid. It is an alternative to sulfite derivatives or metabisulfite, which prevents browning of the packaged potato. The use of pregelatinised modified starch allows the production and application of the coating to be simplified and cheapened.

## Description

Edible coating of fourth range potato, method for application thereof and potatoes coated with same

### Field of the invention

The invention relates to an edible coating that makes it possible to maintain the quality and extend the useful life of fresh, peeled, cut and refrigerated potatoes, which is free from metabisulfite, the main ingredient used in the potato industry for preventing enzymatic browning, as well as to the method of application of said coating and to the portions of potatoes obtained by application of same.

### Background of the invention

Fourth range products are fresh, minimally processed vegetable products, from which the inedible part has been removed, and which have been washed, cut and packaged. The product is prepared ready for consumption, preserving the nutritional and organoleptic characteristics of the raw material to the maximum.

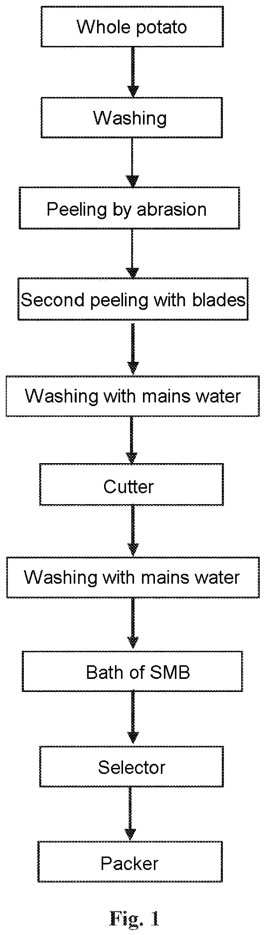

Fourth range potatoes are usually obtained by the method shown in Fig. 1.

As can be seen, said method includes washing the already cut potatoes with mains water, which is carried out basically to remove the starch that is released after cutting the raw material. Removal of the natural starch from the potatoes is mainly carried out to prevent them sticking together during cooking, generating a nonuniform color of the potato after a frying operation. Moreover, washing the cut potato reduces the amount of sugars present on its surface, which are responsible for producing brown coloration on the potato once it is subjected to a cooking process by frying (Maillard reactions). The generation of darker brown colors on fried potatoes results in poor adjustment of their cooking times, since the potatoes turn brown more quickly without their interior being fully cooked.

In the specific case of the potato, the main problem that it presents when it is peeled and cut is rapid darkening of its surface owing to the enzymes contained therein, which react with the oxygen of the air and trigger a series of reactions that generate brownish pigments on the surface of the cut product. To prevent this color change of the product, the potato processing industry employs baths of sulfites, especially sodium metabisulfite (SMB), which in addition to being permitted by the foodstuff legislation, possesses excellent antioxidant properties, preventing the potato darkening after cutting. However, the application of SMB results in an accumulation of bad odors (odor of rotten eggs) in the packaging, typical of sulfur compounds, which would cause rejection by the consumer on opening a pack with these characteristics. This is one of the reasons why there are no fourth range potatoes for retail sale in supermarkets. The consumer can only obtain this product in the frozen section, in which the potatoes, in addition to freezing, have undergone a previous process of frying. At present, all the products made by companies producing fourth range potatoes are directed into the hotel and catering channel, where the cook is the only one to smell this sulfurous odor, which disappears after cooking. In addition to the problems of odor, the use of sulfites in foodstuffs is very controversial owing to the increase in the number of people allergic to these compounds.

Although enzymatic browning is the main problem with this product, the potato also suffers tissue damage as a result of peeling, which also leads to superficial dehydration of the product. The use of SMB not only does not avoid these added problems of dehydration, but also promotes the loss of liquid from the tissue and its subsequent accumulation in the packaging. There are other potato companies that market the product vacuum-packed, but there are still problems of odor after opening.

For this reason, there has been a search for possible substitutes of SMB, or of other compounds in the sulfite group, for preventing browning, both in the potato or in other fourth range products. Many of them are based on application of one or more compounds of the following group, by immersion in a solution containing them:
- ascorbic acid
- sodium ascorbate
- calcium ascorbate
- citric acid,
in some cases also with application of a coating.

Thus, for example, we may mention the documents:
- US 2013/029012, where calcium ascorbate is used, and optionally ascorbic or citric acid, and a coating of crosslinked polysaccharide, which may be of alginate, pectin, carrageenan or gellan, and which must be crosslinked. Its possible application for potatoes is mentioned, although nearly all of the examples relate to fruit. Great importance is attached to gelation of the coating, and that it should be uniform.
- WO 99/034683A1 and WO 99/07230 of Mantrose Haeuser, where it is proposed to preserve recently cut vegetables, including potato, with calcium ascorbate. This group of patents is criticized in other documents, because a large amount of calcium ascorbate is said to be required, which is undesirable and expensive.
- EP0316293A1, of the Monsanto Company, where it is proposed to treat cut surfaces, including of the potato, with a composition that includes an antioxidant (e.g. ascorbic acid), an enzyme inhibitor (CaCl₂), an acidulant (citric acid) and an ion chelator (SAPP). It is mentioned that potatoes require a higher concentration of the treatment composition than other products.
- US5198254B1, of The United States of America as represented by the Secretary of Agriculture, where a coating composition is proposed for various fruits, vegetables or mushrooms, and it includes a photograph that includes potatoes. The coating consists of: a) a polysaccharide polymer, which in theory could be a modified starch, although the only polymer used in the examples is carboxymethylcellulose (CMC); b) a preservative; c) an acidulant (which may be citric acid), d) an emulsifier; e) optionally, an antioxidant may be included (e.g. ascorbic acid).
- Baldwin et al., 1996 ("Improving storage life of cut apple and potato and edible coating", Postharvest Biology and Technology 9 (1996) 151-156), comment that ascorbic acid delays the browning of cut apples and potatoes more effectively when used with an edible coating on tests carried out with NatureSeal 1020™, a coating based on cellulose, or mixed with soybean protein.
- Tien et al. ("Milk Protein Coatings Prevent Oxidative Browning of Apples and Potatoes", Journal of Food Science, Vol. 66, No. 4, 2001, pp 512-516) comment that some food coatings are good barriers to external oxygen and have the capacity to trap and retain oxygen radicals, as is the case with coatings based on milk proteins, especially if CMC is also added.

As can be seen, most of the studies on compositions for preventing browning of fresh vegetables have been conducted on fruits or vegetables other than potatoes. In the specific case of potatoes, there is the particular problem of the higher concentration of the usual substitutes for SMB that has to be used in order for the delay or inhibition of browning to be effective, which is not only a problem from the economic viewpoint, but often gives rise to undesirable effects, such as the generation of acidic or metallic tastes in the product, or loss of liquid through a sudden drop in pH, which will accumulate in the packaging, lowering the quality of the product and causing rejection by the possible consumer who wants to buy said product.

The difficulties in finding a suitable composition that prevents browning of fourth range potato and that does not contain SMB are demonstrated by the absence of this product in the supermarket aisles.

Nor is it easy to find a coating that is imperceptible from a sensory standpoint and that is accepted by the consumer. In most cases it is necessary to use relatively high concentrations of the polymers for them to be effective, making them easily perceptible. In fact, some cellulose derivatives and other polymers such as pectin, carrageenan, alginate or xanthan gum give rise to a sticky texture, at times evident simply by looking, and unsuitable for a cut product like fourth range potato, which moreover has a characteristic texture and appearance.

Conversely, in the case of potato portions that are marketed frozen and generally pre-fried, there may be cases in which a coating is applied to the potato before freezing, with the aim of increasing the crunchy nature of the outside surface of the potato sticks that are already fried, improving the aroma and reducing oil retention. This is described for example in patent ES2073626T3, which gives details of a method in which potato sticks prepared for freezing, once they have undergone the process of blanching and partial dehydration, are covered with a coating of ungelatinized, chemically modified potato starch, chemically modified corn starch, rice flour and other additional ingredients, such as whey. Regarding the potato starch used in these patents, there is a preference for modified starch, mentioning the advantages of crude starch that has undergone a process of chemical crosslinking, because it minimizes agglomeration of the potato sticks during processing. In the patent, much emphasis is placed on trying to avoid gelatinization of the starch before the frying step, also to prevent agglomeration of the sticks during processing.

It is also mentioned that it is important keep the temperature of the solution in which the sticks are immersed below the gelatinization temperature of the starches (both potato starch and corn starch), owing to which it has been found that a solution that contains gelatinized starch is difficult to work and causes agglomeration of the sticks during the frying step. Said patent also describes examples of the most significant prior art, where the potato sticks that are sold frozen are coated beforehand with a hot solution of modified amylose (US3597227), starch with a high content of unmodified and ungelatinized amylose (US3751268) or an aqueous solution of ungelatinized starch (US 4317842).

Other patent documents also show a preference for non-pregelatinized starch for coating potato sticks before being pre-fried and frozen (US4317842), although some cases also envisage the use of pregelatinized starch (US2006/0045955A1) in the same product, arguing that this gives a crunchier product.

Thus, most documents concerning the application of starch on potato sticks that are marketed frozen show a preference for high-amylose and/or non-pregelatinized starch, and have as one of their most important objectives increasing the crunchiness of the pre-fried product and promoting its pre-frying. The starch is generally applied by dipping in a solution that contains it, always after application of a technique directed at preventing enzymatic browning (blanching, or generally treatment with SMB or sulfites) and before the pre-frying process, in which it is also preferable that the sticks do not stick together or become compacted. Moreover, in potatoes of this type, the possible changes in coloration that the starch may undergo during pre-frying, or even during cold storage, are not especially important.

Although no examples are found in the prior art of coating solutions that meet all the objectives that are desired for fourth range potato, it would be advantageous to find an edible coating composition that maintains the original characteristics of the potatoes without giving rise to changes in their organoleptic properties that cause the consumer to reject them. Preferably, a coating that would also make it possible to prevent or delay browning in fourth range potato, while avoiding the use of metabisulfite or other compounds based on sulfites, and without giving rise to the undesirable effects that have been observed in previous similar attempts (acidic and/or metallic tastes, exudation of liquid in the packaging, difficulties for final frying that give rise to an unpleasant product or one that does not have the characteristics desired by the consumer, and so on). Moreover, it is desirable that the composition that would give rise to all these effects could be applied in a single step and, if possible, avoiding the use of high temperatures, which always mean an increase in the cost of the process and, moreover, give rise to changes in the organoleptic and nutritional characteristics of the fresh product. In addition, it must also enable the fourth range potatoes to preserve their characteristics for the normal storage time of products of this type and in their usual conditions for marketing and storage: at least for 8 days in refrigeration, stored in plastic packaging, preferably without needing to use modified atmospheres. Lastly, it is important that their components are permitted by current legislation, particularly by Royal Decree 142/2002, of 1 February, approving the positive list of additives other than colorants and sweeteners for use in the production of food products, as well as their conditions of use, and their inclusion in Regulation (EC) No. 1333/2008 of the European Parliament and Council, dated December 16, 2008, concerning food additives.

The present invention provides a composition that meets these characteristics, as well as the process for application thereof, and the product finally obtained, ready for marketing.

### Summary of the invention

The present invention relates to a composition for coating fourth range potato (peeled and cut potatoes, without culinary processing, which are usually marketed in the form of portions, packaged and generally stored under refrigeration), which maintains the sensory characteristics of the recently cut product throughout its commercial life, as well as the method for applying said coating and obtaining the marketable product, and to the commercial product of fourth range potato obtained by application of said method.

Therefore a first aspect of the present invention relates to a composition for coating portions of peeled and cut potato, characterized in that it is in the form of an aqueous solution that comprises the following components:

| | |
|---|---|
| Modified potato starch | 0.1-10% w/w |
| Sodium ascorbate | 0.5-15% w/w |
| Calcium ascorbate | 0.1-12% w/w |
| Citric acid | 0.05-2% w/w |

Said composition, as well as any possible embodiment thereof included within said definition, will be considered to be the composition of the present invention.

A second aspect of the invention relates to a method for preparing a commercial product of fourth range potato that comprises the steps of:
a) immersing the portions of peeled and cut potato in an aqueous coating solution that corresponds to the formulation of the composition of the present invention;
b) removing the excess aqueous solution.

Said method, and any embodiment thereof, will be considered to be the method of the present invention.

A further aspect of the present invention also relates to a commercial product of fourth range potato obtained by the method of the present invention.

### Brief description of the figures

Fig. 1 shows the steps of a conventional method for obtaining fourth range potato.
Fig. 2 shows the main steps of the method for obtaining fourth range potato of the present invention. The steps of the method of Fig. 1 that are absent from it are shown crossed-out, indicating the steps that replace them at the same level.
Fig. 3 shows a photograph of potato sticks coated with a solution of modified starch at 8% w/w (left side, marked with the letter A) or with a solution of carboxymethylcellulose (CMC) at 0.5% w/w (right side, marked with the letter B). The shiny reflections due to the coating used can be seen in part B.
Fig. 4 shows a photograph of solutions of starch phosphate at 5% w/w (vessel A), acetylated starch at 5% w/w (vessel B) and hydroxypropylated distarch phosphate at 5% w/w (vessel C).
Fig. 5 shows potato sticks treated with 12% w/w of sodium ascorbate and packaged, and the accumulation of exudates in the packaging.

### Detailed description of the invention

The invention relates to an edible coating that maintains the color, appearance, texture and taste of fourth range potato, without accumulation of bad odors, and without the presence of exudates in the packaging for at least 5, and preferably for 10 days of refrigerated storage and, above all, free from SMB.

The edible coating consists of a mixture of polysaccharides and antioxidants, all of food grade, which are permitted in the legislation for fourth range products (see Royal Decree 142/2002 of 1 February, and Regulation (EC) No. 1333/2008 of the European Parliament and Council, dated December 16, 2008, concerning food additives). The ingredients and concentrations used are those shown below in Table 1:

**Table 1. Components of the coating composition of the present invention**

| **Ingredients** | **Range determined (% w/w including water)** | **Preferred range (% w/w including water)** |
|---|---|---|
| Modified potato starch | 0.1-10 | 0.5-5 |
| Sodium ascorbate | 0.5-15 | 2-12 |
| Calcium ascorbate | 0.1-12 | 2-12 |
| Citric acid | 0.05-2 | 0.5-2 |

The various ingredients have the following functions:

### - Modified potato starch

Modified potato starch is the structural matrix of the coating. Owing to its gelling properties it is able to form a thin layer on the cut product, allowing additives to be supported on the surface of the product.

Surprisingly, although the main function of the starch is as a carrier for additives, it has also been observed that its application in conjunction with the rest of the components of the composition gives rise to good characteristics of maintaining the surface hydration of fourth range potato. This is also especially surprising because although there are many companies that produce, market or distribute starches of various origins (corn, potato, tapioca, etc.), whether or not modified, none considers the application of starch for fourth range products.

As used in the present application, modified potato starch means that it has chemical modifications relative to natural potato starch. There are several main groups of modifications, all of them included in the definition of modified potato starch for the purposes of the present invention:
- crosslinking, which involves the formation of bridges between the sugars that form the starch and other chemical compounds;
- substitution with formation of esters or ethers, as in the case of acetylated starch
- a combination of both modifications, crosslinking and substitution.

Modified starches are products permitted for the production of food products, as can be seen in Annex V of Royal Decree 142/2002, in which the permitted carriers and solvents include several modified starches, specifically: oxidized starch (E-1404), monostarch phosphate (E-1410), distarch phosphate (E-1412), phosphated distarch phosphate (E-1413), acetylated distarch phosphate (E-1414), acetylated starch (E-1420), acetylated distarch adipate (E-1422), hydroxypropylated starch (E-1440), hydroxypropylated distarch phosphate (E-1442), starch sodium octenyl succinate (E-1450), acetylated oxidized starch (E-1451). All of these are considered to be included in the definition of modified starch for the purposes of the present invention.

According to the tests that are described hereunder in Examples 1 and 2, there is a preference for starches modified by crosslinking, as in the case of distarch phosphate, preferably when they are present in the coating composition at high concentration (10% w/w), giving rise to slightly cloudy solutions, and forming an edible coating suitable for coating potatoes at the aforementioned concentration of 10% w/w. There is particular preference for starches that have both of the chemical modifications, crosslinking and substitution, such as hydroxypropylated distarch phosphate; as is shown in Example 2, it is a modified starch that is both gelled by heat after dissolution, and is used for the water-soluble coating in pregelatinized form; it is able to form transparent gels that are not sticky, qualities that are desirable for fourth range products, especially for potato portions. It is colorless, does not impart any taste, it is easily dispersible and is used for various types of processed products, such as soups, ice creams, drinks, sauces or even in breadmaking. Since its consistency is quite high starting from concentrations above 5% w/w, and the form that is not pregelatinized presents difficulties in gelation when it is used at concentrations below 0.5% w/w, it is preferable for the modified potato starch to be used in the coating composition at a concentration of 0.5-5% w/w, particularly in the case of a starch with crosslinking and substitution like hydroxypropylated distarch phosphate. Said concentration range may be combined with any concentration range of the present invention of the antibrowning components of the coating: sodium ascorbate, calcium ascorbate, citric acid. Specifically, it has been observed that when using potato starch modified by crosslinking and substitution at concentrations between 1% w/w and 4% w/w for coating potatoes, the coating has a light consistency and a transparent appearance, which does not give rise to negative changes in appearance of the potatoes on using them, therefore said range is especially preferred.

Preferably, the modified starch is pregelatinized starch, which does not require the application of heat for preparation, as it can be dissolved easily in cold water, which is to be recommended for application on fourth range products, which must be kept at low temperatures (preferably at approximately 4°C) during processing and storage. The use of pregelatinized starch offers a technological advantage, since it leads to a saving of the energy that would be needed to achieve its gelatinization by heat, and also avoids the expenditure of time that would be needed for heating and cooling it before it is applied on the fourth range product.

That the starch used is not pregelatinized is also compatible with the present invention. In this case, it is necessary to heat it separately in water until it is completely gelatinized, and leave it to cool before combining it with the other components of the coating.

The modified potato starch, preferably pregelatinized, and preferably in the concentration ranges indicated, may be combined with the other components, which will for example be at a concentration within the preferred ranges that are indicated in Table 1. The functions of said components are:

### - Calcium ascorbate:

This has a dual function. The first as antioxidant, inhibiting the main enzyme causing enzymatic browning and therefore the surface darkening of potato, polyphenoloxidase. Moreover, the calcium supplied by this ingredient can improve and maintain the texture of the cut product since it causes stabilization of the cell walls of the cut tissue, in addition to maintaining surface hydration of the latter.

### - Sodium ascorbate:

Its main function is also as an antioxidant, which, combined with calcium ascorbate, prevents the formation of brown coloration on cut potatoes.

### - Citric acid:

In addition to its antioxidant function, citric acid behaves as a chelator of metal ions, which are essential for microbial development, and it can act indirectly as an antimicrobial agent.

These last three components of the coating composition of the present invention are permitted additives for producing fourth range food products, which are mentioned in Annex II of Royal Decree 142/2002, in the "Processed Vegetable Products" section, specifically in the subsection relating to "unprocessed fruits, pulses and vegetables, frozen and deep-frozen. Unprocessed fruits, pulses and vegetables, packaged and refrigerated, ready for consumption. Packaged peeled, unprocessed potatoes", the edible coating of the present invention being intended for this last-mentioned product.

As has been mentioned, the method of application of the coating on the potato portions also forms part of the present invention, as well as the embodiments thereof that include the preliminary step for preparing the coating and/or the subsequent steps of packing the already coated potato portions, and preferably storage of the packaged product, preferably in conditions of refrigeration.

The coating per se is an aqueous solution of all the components mentioned above. It is obtained by mixing the components with water in sufficient amounts for forming an aqueous mixture of all the components at the desired concentration. The water used for obtaining this aqueous mixture may be mains water, as in the examples in the present application. When the plant for producing fourth range potato is in a location where the mains water has a high content of salts, particularly calcium salts, it may be convenient to use water treated beforehand to lower its content of salts.

When pregelatinized modified starch is used for the coating, the mixture of all the components in powder form can be dissolved in cold water (water at a temperature below room temperature, without reaching 0°C, preferably 4-8°C), or in water at room temperature, until completely dissolved. Generally this is achieved using a stirring system, between approximately 5 and 15 minutes (preferably 10 minutes). In the case when the modified starch used is pregelatinized, it is not necessary to apply heat. If modified starch is used without gelatinization, as mentioned above, it is necessary to heat the starch solution beforehand to approximately 70°C, until gelation is completed. Then the solution has to be cooled to room temperature or lower, but above 0°C, preferably between 4 and 8°C, and then incorporate the antioxidants (most of which are heat-sensitive) and, once everything is mixed, use the resultant solution as an edible coating for cut potatoes.

For the purposes of the present invention, it is not recommended to apply the solutions of each component of the coating composition separately to the cut potato, since the coating does not yet have a carrier for the antioxidants, therefore there would be poorer retention on the surface of the potato, and the effects observed would also be poorer.

Thus, the coating is applied to the pieces of cut potatoes by dipping the product in the aqueous coating solution that corresponds to the formulation of a composition of the present invention and that has been prepared beforehand. For this, the clean pieces of potato are immersed in the coating bath, for example for 1 minute. After the period of immersion, the excess aqueous coating solution is removed, which may be effected by a process of draining in a system of grids, by vibration or by means of a forced-air suction system. Finally the coated potato is packaged, and preferably stored under refrigeration, without using modified atmosphere.

Before undergoing the steps of coating and removal of excess aqueous solution, the portions of peeled and cut potatoes must be passed through a water bath to remove the excess of the potato's own starch; the water may be mains water. Preferably, the peeled potatoes are also washed before being cut, and this washing may also be done with mains water.

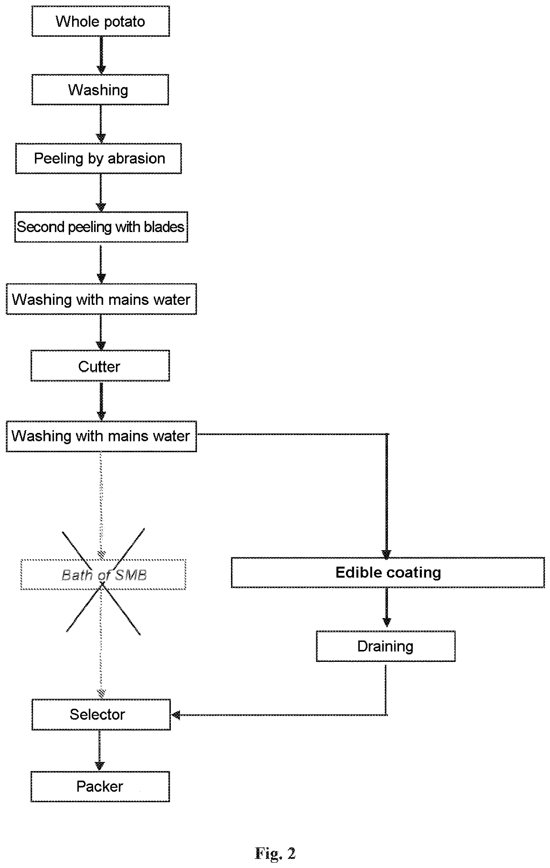

Fig. 2 shows a flowsheet of a typical process for obtaining fourth range potato that includes all these steps, including application of the edible coating on the production line. This figure also shows how the steps of application of the edible coating of the present invention and draining of the excess liquid offer an alternative to application of the conventional bath of SMB in the processing of fourth range potato.

The method makes it possible to obtain cut fresh potato, with a useful life of 10 days in conditions of refrigeration, whose general appearance is that of a recently cut potato: without browning, hydrated, without accumulation of liquid and without the presence of bad odors typical of the use of SMB.

Refrigeration is the keeping of a product at temperatures below room temperature, preferably close to 0°C, without reaching the freezing point of the product. As used in the present application, refrigeration means keeping at temperatures between 0°C and 8°C, while freezing requires temperatures below 0°C. Usually, at points of sale of foods to the consumer, refrigerated foods are usually at temperatures of 4°C-8°C, therefore, for the purposes of the invention, it is assumed that the packaged potatoes of the present invention will probably be kept in this temperature range during storage and marketing, until they are purchased by the consumer. It is preferable for the pre-packaged potato portions to be kept between 2°C and 4°C until they are purchased by the consumer or at least during storage thereof in the place of production.

The potato treated with this edible coating keeps its original taste, odor and color throughout the storage time, and the sensory characteristics of the product are maintained after a cooking process.

Moreover, this is achieved because the present inventors have succeeded not only in identifying a suitable coating polymer for this type of product, but also in defining the optimal concentrations of each of the ingredients of the formulation, so that they are combined appropriately and a product is obtained with the desired characteristics of freshness.

The present inventors observed, as is discussed in the examples presented below, that the use of a starch coating as a carrier of antioxidants makes it possible to minimize the concentration of said ingredients in the formulation of the edible coating, reducing the concentration that would be necessary if each compound were to be used separately, or even if only a mixture of compounds directed at preventing enzymatic browning were to be used. This prevents undesirable effects being produced in the final product, such as accumulation of liquid in the packaging due to the effect of a low pH and appearance of various tastes in the final product (metallic or acidic tastes). In the present case, although the concentrations of the agents directed at preventing enzymatic browning may be considered to be low, lower than would be necessary if they were applied individually, when they are incorporated in the same composition that contains the starch, these concentrations are sufficient to prevent the problem of browning for the useful life of the product.

Accordingly, as can be seen in Example 3, improved capacity for inhibition of browning is observed when the coatings are formed from compositions that include the conventional antibrowning agents (sodium ascorbate 2-6% w/w, calcium ascorbate 2-6% w/w and citric acid 1% w/w) and also include modified potato starch in the previously selected concentration range (1-4% w/w), specifically between 1.5 and 3% w/w.

There seem to be various reasons why this is so, including that the polymer coating, in this case modified potato starch, allows the antioxidants to be fixed on the surface of the cut product, which is where browning begins, making it possible to reduce the concentration of the additives added to the formulation of the coating.

Therefore it may be considered that there is a synergistic effect between the various components that make up the composition that is used for creating the coating, when said components are present at the concentrations of the composition of the present invention and the components of the latter are in the appropriate proportions for this effect to occur. This synergistic effect can be seen, for example, in the tests in Example 3 of the present application, particularly in Table 4: whereas in the formulations without modified starch, it is necessary for at least one component of the pair formed by sodium ascorbate and calcium ascorbate to be at a concentration of 6% w/w and the other at least 4% w/w for the level of browning observed after 10 days to be minimal (see formulations 6, 8 and 9 in said table), the presence of modified potato starch at 1.5% w/w makes it possible to lower the total concentration of ascorbate that gives rise to optimal inhibition of browning, so that one of the components of the pair formed by sodium ascorbate and calcium ascorbate may be at a concentration of 2% w/w and optimal results with respect to inhibition of browning may be obtained if the other component is at a concentration of 6% w/w. For its part, the use of modified starch at 3% w/w gives optimal results of inhibition of browning with lower concentrations of sodium ascorbate and calcium ascorbate. Thus, preferred compositions of the invention, giving rise to optimal results of inhibition of browning after 10 days of refrigeration of the coated potato portions, packaged and stored in refrigeration, are those in which the concentration of citric acid is greater than or equal to 1% w/w and
a. the concentration of modified potato starch is 1.5%, and
   i) if one of the components of the pair of sodium ascorbate and calcium ascorbate is at a concentration of 2% w/w, the other component is at a concentration of 6% w/w, or
   ii) if one of the components of the pair of sodium ascorbate and calcium ascorbate is at a concentration of 4% w/w, the other component is at a concentration of at least 4% w/w,
   or
b. the concentration of modified potato starch is 3%, and if one of the components of the pair of sodium ascorbate and calcium ascorbate is at a concentration of 2% w/w, the other component is at a concentration of at least 4% w/w.

Among these, embodiments of the coating composition of the present invention may be considered especially preferred that correspond to formulation B, D and F used in Example 4, all of which were prepared with pregelatinized modified potato starch and gave rise to a good general appearance of the coated potato portions, packaged and stored under refrigeration for 10 days, taking into account various characteristics that have an influence on the perception of quality of these products on the part of the consumer, such as color, odor, hydration and presence or absence of liquid in the packaging.

The present inventors spent a lot of time identifying the appropriate agent as edible coating that would act as the carrier of the antioxidants, maintaining the characteristics of freshness of the potato, but that would also not be perceptible from a sensory standpoint, i.e. that the consumer would not be able to notice a different texture (gelatinous) on touching the product, that an opaque or very shiny layer would be noticed that alters the visual perception of the cut product or itself causes some change in taste or odor of the finished product. This sensory aspect is not so problematic in other fourth range products, such as certain fruits, vegetables or market garden produce, where some of the edible coatings discussed previously (CMC, alginates, etc.) may not give rise to such a pronounced sensory change as occurs with potatoes. Nor is it evaluated in other foods such as bread, soups, ice creams, etc., where starch is used for other technological purposes and where the sensory change of the product is somewhat secondary since it forms part of a set of ingredients to be mixed and whose final result is another food, whereas in the portions of peeled and cut potato it may be regarded as the "wrapper" of the product, which means that it must comply with some specific functions and requirements.

It is surprising that the polysaccharide that proved suitable as coating agent is potato starch, when in fact, in the usual method for preparing fourth range potato, the potato is washed for a second time with mains water to remove the starch that is released after cutting the raw material. This subsequent washing is carried out after cutting the potato to the desired size, before applying the typical SMB treatment or, in the case of the method of the present invention, before applying the edible coating. The starch is removed mainly to prevent problems of color and agglomeration in the finished product, as explained above. It is therefore contradictory to immerse the fresh potato portions in a solution containing starch, to cover them with the latter, when previously washing had been carried out to remove the starch from the potato.

As mentioned above, for optimal attainment of the desired effects, there is particular preference for hydroxypropylated distarch phosphate, a modified starch that forms transparent gels that are not sticky, which is used in various processed foods, but its use in fourth range products was unknown.

There is even greater preference for using said pregelatinized modified starch, because of the advantages that this polysaccharide offers.

Preference for this type of already pregelatinized starch assumes there is an important difference from the starch coatings that are applied to potato sticks that are marketed frozen, generally pre-fried, where there is a preference for starches rich in amylose or for amylose per se that has not been pregelatinized, as discussed above, since the organoleptic and functional characteristics that are required from starch in products of this type are different from those required here. It must be emphasized that in frozen pre-fried potatoes the aim is to prevent agglomeration, stickiness and excessive absorption of oil during pre-frying, and a crunchy final product is required when consumers carry out their own frying, characteristics for which starches with a high amylose content are preferable, since amylose gelatinizes with the heat of cooking, forming a layer on the surface of the sticks, which is very desirable in the case of frozen pre-fried potatoes. In fact, in various documents relating to the preparation of cut potatoes that are marketed frozen, it is recommended to take special care to avoid the use of pregelatinized starches, since what is desired is that the starch gelatinizes with the heat of cooking. Moreover, in the usual methods for producing frozen potatoes, the possible starch coating is applied once the whitening or antibrowning agent, generally SMB, has been applied, the two being regarded as agents with different functionalities, both being necessary for suitable characteristics of the final product. In the method of the present invention, however, starch forms part of the composition that is applied to prevent browning, and is applied together with the antioxidants, simplifying the method.

Moreover, the use of pregelatinized starch, as has been mentioned, means that it is not necessary to use heat for its preparation, as it dissolves easily in cold water, which is to be recommended for application thereof to fourth range products. Moreover, it can be dissolved directly in cold water together with the antioxidants that form part of the coating, without the latter being altered through the use of high temperatures in their preparation. Conversely, when non-pregelatinized starch is used for preparing the coating composition, this requires a preliminary step of heating the starch dissolved in water, until it is gelatinized, and a step of cooling to at least room temperature or a temperature above 0°C, preferably between 4°C and 8°C, before mixing it with the other components. In either case, the components of the coating composition are applied together, once mixed and dissolved, in one and the same solution.

As can be seen in the flowsheet of the method, the edible coating solution in which the potato portions are immersed after washing with water contains all the components that form part of the edible coating, preferably in the form of aqueous solution. To be able to apply all the components together, in the same solution, is also an advantage, since it simplifies the process, as there is no need for a step for applying the polymer matrix (modified starch) and another for applying the compounds with more purely antioxidant properties (sodium ascorbate, calcium ascorbate, citric acid). Moreover, incorporation of the antioxidants in the pregelatinized modified starch matrix makes it possible to maintain said active substances on the surface of the cut potato, increasing its effectiveness over time. As mentioned above, it is especially advantageous if the modified starch used is pregelatinized starch, because in these circumstances it can be dissolved directly in cold water together with the antioxidants that form part of the coating, without the latter being altered through the use of high temperatures in their preparation.

Therefore the present invention offers advantages both with respect to the characteristics of the final product obtained and with respect to the simplicity of the method of application.

The following examples illustrate the most significant tests performed by the inventors for investigating the effectiveness of various edible substances that are able to maintain the original characteristics of fourth range potato, avoiding the use of SMB at all times. Tests were conducted with various polysaccharide matrices that would serve as a carrier of active ingredients. Moreover, those antioxidants were investigated that gave, alone or combined, a good result against enzymatic browning, and the particular concentrations thereof that lead to optimal results. In all this research, an edible coating was obtained that preserves fourth range potato without browning, without accumulation of bad odors, and without the presence of exudates in the packaging for 10 days of refrigerated storage and, above all, free from SMB. The examples include the sensory evaluation that was performed.

### Examples

### - Example 1. Evaluation of various polysaccharides used in the formation of edible coatings intended for application on fourth range potato

With the aim of being able to determine the best polysaccharide matrix for use as a coating on cut fresh potatoes, various polysaccharides capable of forming an edible coating on the surface of pieces of fourth range potato, without observing a change in their sensory characteristics, were compared individually. For this, firstly the intrinsic characteristics of the polysaccharides in question were evaluated (form of dissolution, consistency and transparency), as well as the sensory aspects of the potato once coated with said polysaccharides (texture: stickiness, shine/opacity and uniformity of the coating on the cut potato).

Firstly, the various solutions of edible coatings consisting of polysaccharides were prepared at concentrations between 0.1 and 10% w/w. The polysaccharide matrices were formed from: cellulose derivatives (carboxymethylcellulose-CMC, methylcellulose-MC, hydroxypropylmethylcellulose-HPMC), pectin (high methoxylation), carrageenan, modified starch, alginate and xanthan gum. These polysaccharide matrices were selected for their capacity for forming the coating, for their transparency, and for not imparting any kind of taste or odor to the finished product. The coatings based on proteins were rejected because of the milky appearance of the resultant solutions, and because of the problems of allergenicity associated with these components.

As an example of modified starch, a crosslinked product was selected, specifically crosslinked distarch phosphate.

The solutions of polysaccharides were prepared according to the intrinsic gelation characteristics of each polysaccharide, with the use of heat being necessary in some cases.
- The solutions of CMC were prepared using carboxymethylcellulose (7HF, Ashland, USA) at concentrations between 0.1 and 3% w/w, dispersing the polysaccharide in cold water (4-6°C) by stirring continuously for 20 minutes.
- The solutions of MC and HPMC (A4M, F50, Ashland, USA) were prepared by thermal shock, firstly dissolving said polysaccharides in hot water (90°C), and stirring continuously for 5 min. Once dissolved, the solutions were transferred to an ice bath to produce gelation of the polysaccharides, stirring said mixtures continuously for a further 5 minutes. Concentrations between 0.1 and 2.5% w/w were used in the case of methylcellulose; and from 0.1 to 5% w/w in the case of hydroxypropylmethylcellulose.
- The solutions of pectin with a high degree of methoxylation (Unipectine MRS 150, Cargill, France) were prepared by dissolving the polysaccharide in hot water (80°C) at concentrations between 0.1 and 4% w/w. For this, the pectin was dispersed by stirring continuously for 15 minutes.
- For their part, the solutions of carrageenan (Ceamgel 1860, Ceamsa, Spain) were prepared at concentrations from 0.1 to 1% w/w, by direct dissolution of the polysaccharide in hot water (80°C), stirring the solution continuously for 10 minutes.
- The solutions of modified potato starch (Perfectamyl FFC, Avebe, The Netherlands) were dissolved in water by stirring and then heated (70°C) for 30 minutes. The concentrations of modified potato starch were between 0.5 and 10% w/w.
- In addition, solutions of alginate (Algogel 6021, Cargill, USA) were prepared between 0.1 and 5% w/w, which were prepared by direct dissolution of this polymer in hot water (70°C) using a high-speed stirring system (10 minutes). In this case, a 2% w/w solution of calcium chloride (Magnesia, Germany) was also used as crosslinking solution of the polysaccharide when this was used for coating the pieces of potato, and this was prepared by direct dissolution of the crosslinking agent in cold water.
- Finally, the solutions of xanthan gum (P200S, Carob S.A., Spain) were prepared by dissolving the polysaccharide in cold water until completely dissolved (approx. 10 minutes), employing concentrations between 0.1 and 1% w/w.

Once the solutions of edible coatings were obtained, they were applied on sticks of potato of the Agria variety. For this, the whole potatoes were washed on the surface, peeled, cut in the form of sticks, and washed again. The potatoes obtained were immersed in the various solutions of polysaccharides for 1 minute. After this period of time, the samples of potatoes were drained and packaged in polypropylene bags without modification of the atmosphere, and then stored for 24 hours under refrigeration, until they underwent assessment. 6 bags of potato sticks were packaged (200g each) per type and concentration of polysaccharide tested.

The results obtained with the various polysaccharide matrices investigated, as well as the sensory characteristics of the potato once coated, are shown in Table 2.

**Table 2. Characteristics of the polysaccharides investigated as edible coatings for fourth range potato and sensory quality of the potato sticks coated with them**

| **Polysaccharide** | **Characteristics of the edible coating** | **General appearance of the coated potato sticks** |
|---|---|---|
| CMC | Easy dissolution at very low concentrations, without requiring the use of heat. Solutions with a high consistency starting from 0.5% w/w. Transparent coatings. | Sticky texture on the surface of the potato sticks when used at concentrations above 0.3% w/w. Formation of a uniform coating on the surface of the potato but with a very shiny appearance. |
| MC and HPMC | Requires heat for gelation with subsequent cooling of the solution by thermal shock. Solutions are manageable but very thick at concentrations above 1.5% w/w. Whitish coatings. | Do not form a homogeneous layer on the surface, texture sticky to the touch starting from very low concentrations. Shiny appearance of the potatoes coated at concentrations above 2% w/w. |
| Pectin | Easy dissolution at very low concentrations using heat. Solutions very thick starting from 3% w/w. Transparent coatings. | Good sensory properties of the potato sticks when applied at low concentration (below 0.5% w/w). At higher concentrations there is a notable change in appearance of the coated potato, and it is sticky to the touch. |
| Carrageenan | Requires heat for preparation. Very high consistency starting from very low concentrations (above 0.5% w/w), with gelation processes starting as the solution is cooled. Transparent coatings. | Sticky texture on the surface of the potato sticks, starting from very low concentrations, above 0.3% w/w. Transparent coating but very evident to the naked eye (excessively shiny). |
| Modified starch | Requires heat for preparation. The solutions obtained are of very low consistency at concentrations below 10% w/w. Transparent coatings. | Texture neither sticky nor perceptible, even at high concentrations. Uniform coating of the surface but of slightly opaque appearance when used at high concentrations (10% w/w). |
| Alginate | Requires heat for dissolution at high concentrations. Application of a second bath with calcium is necessary for gelation. Solutions very thick above 2% w/w. Transparent coatings. | Formation of a uniform coating on the surface of the potato after applying a second bath with calcium. At concentrations above 1% w/w, the coating becomes perceptible and the surface becomes very shiny. |
| Xanthan gum | Does not require heat for preparation. Solutions very thick above 0.5% w/w. Transparent coatings. | Sticky texture of the surface of the potato sticks at very low concentrations, in addition to being easily perceptible to the naked eye because excessively shiny. |

Although all the polysaccharides investigated are used for producing edible coatings and films, their application for fourth range potatoes has been limited by several factors, and mainly by the high viscosity of many of the polysaccharides (solutions with a thick texture). It was observed that when using cellulose derivatives, pectin, carrageenan, starch or xanthan gum, which had a very thick texture, a very perceptible layer formed on the surface of the potato, which had an adverse effect on the visual quality of the product, which became very shiny, sticky and of a rather unnatural appearance. However, when pectin, carrageenan or alginate were used at low concentrations (below 0.5% w/w), in many cases a product was obtained with good sensory characteristics (not sticky, not shiny, transparent), but the method of dissolution was still complex. In these cases it was necessary to use high temperatures for preparing the solutions of MC, HPMC, carrageenan, starch, and alginate, therefore it was essential to heat the solution of the polysaccharide and then cool it so as to be able to apply it on fourth range potato. Fourth range products must be kept at low temperatures (approx. 4°C) during processing and storage, therefore the use of these polysaccharides would represent an extra expenditure of time and resources.

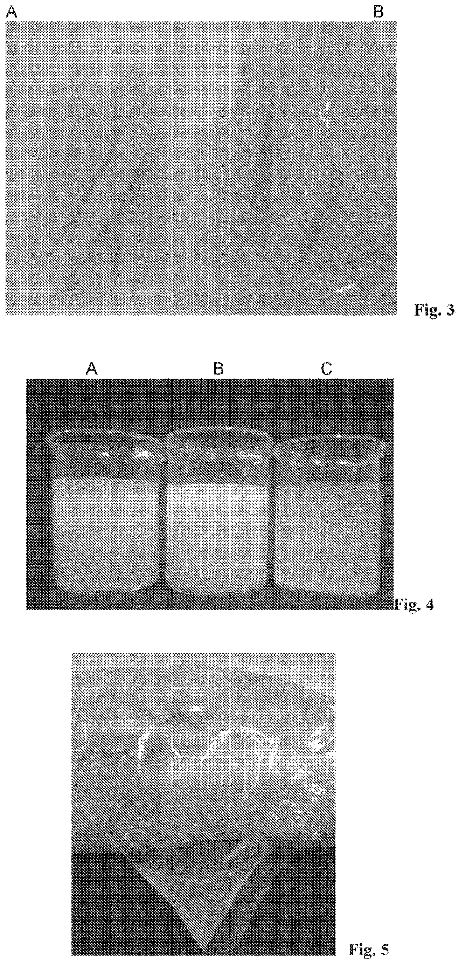

After analysis of the results, it was modified starch that displayed the best properties for use as an edible coating on fourth range potato, since despite the need to heat and cool the solution, its viscosity was very low, allowing it to be applied without affecting the sensory characteristics of fourth range potato, as can be seen in the photograph in Fig. 3. For this reason it was decided to go more deeply into the use of a polysaccharide matrix based on modified starch for application as an edible coating as a carrier of additives on fourth range potato (Example 2).

### - Example 2. Effectiveness of modified starch used as edible coating for fourth range potatoes

### 2.1. Comparison of different modified starches

In view of the results obtained in Example 1, it was decided to verify the effectiveness of modified starch as an edible coating for fourth range potato. In order to be able to define the type of modified starch most suitable as an edible coating on fourth range products, comparative tests were carried out with various solutions of chemically modified starches.

In these tests, the native starches (natural starches of different origins, without chemical modifications) were rejected, mainly on account of the whitish appearance of the resultant solutions, the difficulty of dissolving them, and the high viscosity of the solutions obtained after the hot gelation process.

The various starch solutions were applied on cut potatoes with the aim of evaluating the properties of said polysaccharide as an edible coating on fourth range potatoes. For this, the coatings were applied on sticks of potato of the Agria variety, by dipping for 1 minute, and then removing the excess solution by draining, as explained in Example 1. Next, the samples were packed in polypropylene bags (200g) without modification of the atmosphere and were stored for 24 hours under refrigeration, until they underwent assessment. Six (6) bags were packed per treatment, which represented the number of repetitions.

This test used chemically modified starches, either by crosslinking (formation of bridges between the sugars that form the starch and other chemical compounds), by substitution (formation of esters or ethers) or by a mixture of both modifications. Since the properties of starch vary according to the type of chemical modification to which it is subjected, various solutions were prepared, using distarch phosphate (Perfectamyl FFC, Avebe, The Netherlands) as the reference of crosslinked starch, acetylated starch (Perfectamyl AC, Avebe, The Netherlands) in the case of starch modified by substitution, and hydroxypropylated distarch phosphate (Microlys 52, Trades, Spain) for the case of starches that have undergone both chemical modifications.

All the solutions were prepared at concentrations between 0.1 and 10% w/w by instant dissolution of the polysaccharide in cold water, it then being necessary to apply heat (90°C) for gelation of the starches. Once the solutions were prepared, their consistency and degree of transparency were assessed.

In general, the coatings made from distarch phosphate generated solutions that were slightly cloudy; however, they did not form gels easily, requiring high concentrations of starch (10% w/w) to form an edible coating suitable for coating potatoes, as demonstrated in Example 1.

For their part, the solutions of acetylated starch did not form a gel at any of the concentrations evaluated, and moreover the resultant solutions were of a whitish color, which had an adverse effect on the visual appearance of the potato once coated with said solutions.

On the other hand, the solutions of hydroxypropylated distarch phosphate showed a quite high consistency starting from 5% w/w, and in some cases the solutions were more transparent than before (see Fig. 4). The solutions produced with this type of starch did not gel when used at concentrations below 0.5% w/w, therefore concentrations between 1 and 4% w/w were used for coating the potatoes. In this concentration range, the coating obtained had a light consistency and a transparent appearance. In fact, once said solutions were applied on the potatoes, the latter did not show any adverse change in their appearance.

Therefore, within the concentration range of 0.5-5% w/w, the range of 1-4% was selected as the preferred range from which to select the concentrations of modified potato starch to be combined with the antioxidants of the coating in the next tests.

### 2.2. Effect of pregelatinization

The starches may also be modified physically, thus generating pregelatinized starches, which do not require heat for preparation. Therefore another test was conducted, for comparing the effect of hydroxypropylated distarch phosphate used previously (Microlys 52, Trades, Spain) with another solution of the same polysaccharide, but this time pregelatinized (Swely gel 705, Trades, Spain). This last-mentioned solution was prepared by direct dissolution of starch in cold water by stirring continuously for 5 minutes, at concentrations between 0.1 and 10% w/w.

The solutions obtained with this pregelatinized starch were very similar to the starch without pregelatinization, obtaining transparent solutions of high viscosity above 5% w/w.

Good results were observed on fourth range potato when pregelatinized hydroxypropylated distarch phosphate was used as the edible coating at concentrations below 4% w/w. In this case, just like the results obtained with said starch without pregelatinization, the appearance of the potato was natural, without the presence of shiny areas or milky hues and without textures that are sticky to the touch, the coverage of the potato being uniform and imperceptible. One of the most important characteristics of fourth range products is their visual quality, therefore application of an edible coating that is undetectable to the naked eye is of vital importance to avoid immediate rejection of the cut product by the consumer.

In addition to the importance of using an imperceptible edible coating on fourth range products, it is also important to avoid the color changes that the tissue may undergo once cut. In the specific case of the potato, a number of changes occur in surface color as a result of enzymatic reactions, promoted by the presence of oxygen. Therefore the application of antioxidant substances proves indispensable for extending the useful life of this foodstuff. The effectiveness of antioxidant substances intended to be incorporated in edible coatings for coating fourth range potato is discussed in Example 3.

### - Example 3. Evaluation of a modified starch coating as a carrier of antioxidant substances applied on fourth range potatoes

### 3.1. Evaluation of combinations of antioxidants

The use of antioxidant substances that prevent enzymatic browning on products susceptible to darkening is a widely used technique for fourth range products. Antioxidant solutions based on acids or salts thereof are the most used for preventing enzymatic browning on products such as potato. However, for them to have an antidarkening effect on cut potato it is necessary to use high concentrations of these compounds, having an adverse effect on the sensory quality of the final product. The use of high concentrations of antioxidants generates acidic and/or metallic tastes in the cut product, as well as softening of the tissues and generation of exudates.

The purpose of this test was to determine, on the one hand, the effect of the separate use of a group of antioxidant compounds (sodium ascorbate, calcium ascorbate and citric acid) for maintaining the visual quality of cut fresh potatoes, and on the other hand, to define their antioxidant behavior when they are incorporated in a polysaccharide matrix, in this specific case, of hydroxypropylated distarch phosphate.

Therefore, firstly, various concentrations of antioxidant solutions were prepared, as detailed below in Table 3, which were then used for treating pieces of potato. The solutions of calcium ascorbate (CSPC Weisheng Pharmaceutical, China) and sodium ascorbate (Hebei Welcome Pharmaceutical, China) at concentrations between 2 and 12% w/w were prepared by direct dissolution in cold water (4-6°C), stirring continuously until completely dissolved (5 minutes). For their part, the solutions of citric acid (RZBC Imp & Exp C.O, China) were prepared by direct dissolution in cold water (4-6°C) at concentrations between 0.5 and 2% w/w.

For the purpose of being able to define the ranges of effectiveness of the antioxidant compounds, taken individually, they were applied on sticks of potato of the Agria variety, which were washed on the surface, peeled, cut in the form of sticks, washed and dipped in the antioxidant solutions for 1 minute. After this period of time, the samples of potatoes were drained and packaged in 200g bags of PP, without using modified atmosphere. 6 bags of each treatment were packed, and then stored for 48 hours in refrigeration, until they underwent assessment.

Visual assessment of the product was carried out, the main aspect evaluated being the color changes (presence or absence of browning). A scale from 1 to 5 was employed for evaluating the potatoes treated with antioxidants, 1 being the value assigned to potatoes with considerable browning (dark hues on the surface) and 5 being the value assigned to those potatoes with a natural, yellow appearance and coloration, with complete absence of browning. In addition to the presence or absence of surface darkening, a general evaluation of the product was also performed after 48 hours of storage.

**Table 3. Effect of the individual use of antioxidants on the visual quality of fourth range potatoes**

| Antioxidants | Concentration (% w/w) | Color assessment | General appearance |
|---|---|---|---|
| Calcium ascorbate | 2 | 1 | Unacceptable |
| | 4 | 1 | Unacceptable |
| | 6 | 1 | Unacceptable |
| | 8 | 2 | Unacceptable |
| | 10 | 3 | Acceptable color. Accumulation of liquid |
| | 12 | 5 | Acceptable color. Accumulation of liquid |
| Sodium ascorbate | 2 | 1 | Unacceptable |
| | 4 | 1 | Unacceptable |
| | 6 | 3 | Unacceptable |
| | 8 | 5 | Acceptable color. Accumulation of liquid |
| | 10 | 5 | Acceptable color. Accumulation of liquid and softening of tissues |
| | 12 | 5 | Acceptable color. Accumulation of liquid and softening of tissues |
| Citric acid | 0.5 | 1 | Unacceptable |
| | 0.75 | 3 | Unacceptable |
| | 1 | 4 | Acceptable |
| | 1.5 | 5 | Acceptable |
| | 2 | 5 | Acceptable |

As can be seen in Table 3, individual use of calcium ascorbate or sodium ascorbate as antioxidant leads to the use of high concentrations of both compounds in order to obtain a product free from browning. In the case of calcium ascorbate, concentrations above 10% w/w are necessary to obtain satisfactory results with respect to color. The same applies when using sodium ascorbate, the concentrations of which must exceed 8% w/w to obtain potato without browning. However, the use of these antioxidants at high concentrations has an adverse effect on other aspects of product quality, with exudations from the tissue and accumulation of liquid in the packaging (see Fig. 5). For example, in the case of potato sticks treated with sodium ascorbate at 12% w/w, there may be accumulation of up to 40 ml of liquid after 48 hours of storage, making this potato unacceptable even though from a visual standpoint it is acceptable (Table 3). In the case of citric acid, it was necessary to use a concentration of 1% w/w to observe an improvement in the color of the cut product. However, it had been observed in previous studies that citric acid in concentrations above 1% generates acidic tastes that substantially alter the sensory characteristics of the coated potato once cooked.

### 3.2. Evaluation of antioxidants together with the starch coating

In order to verify whether the incorporation of antioxidants in the modified starch coating would make it possible to use a lower concentration of these compounds on fourth range potatoes (without losing their effectiveness against darkening), the following test was designed. Firstly, various solutions of edible coatings were prepared, consisting of a mixture of modified potato starch (hydroxypropylated distarch phosphate, pregelatinized) and the various antioxidants mentioned above (see Table 4 hereunder). For this test, concentrations of potato starch were used that did not exceed 3% w/w, specifically concentrations that varied in the range 1.5-3% w/w, selected on the basis of the good sensory results obtained in the preceding example when modified starch was applied on potato sticks in concentrations that varied in the range 1-4% w/w. For its part, the concentration of citric acid was kept constant at 1% w/w in order to avoid generating acidic tastes on the potato. It had been observed in preliminary tests that citric acid in concentrations below 1% w/w has a limited antioxidant effect, even in combination with other antioxidants; however, its incorporation in the formulation allows a slight decrease in pH of the coating solution, which could prevent the growth of spoilage microorganisms in the solution.

For this test, a first mixture of all the ingredients was prepared in powder form, which was then dissolved as a whole in cold water (4-6°C), using a system for continuous stirring (5 minutes). The comparative study was performed with various combinations of said compounds within a specified range, as can be seen in Table 4, analyzing the combined effect of the ingredients once it is applied on the potato. The method of producing the potatoes, and application of the coating, as well as the system for evaluating browning, were the same as used for evaluating the antioxidants individually, the color changes (presence or absence of browning) being the main aspect evaluated. For this, a scale from 1 to 5 was employed, 1 being the value assigned to potatoes with considerable browning (dark hues on the surface) and 5 being the value assigned to those potatoes with a natural, yellow appearance and coloration, with complete absence of browning. In addition to the presence or absence of surface darkening, a general assessment of the product was also undertaken after 48 hours of storage.

The formulations capable of completely preventing browning of the cut tissues were given a positive assessment.

**Table 4. Formulations used as edible coating for preventing enzymatic browning on fourth range potatoes**

| **Formulation** | **Ingredients (% w/w)** | | | | |
|---|---|---|---|---|---|
| | **Modified starch** | **Sodium ascorbate** | **Calcium ascorbate** | **Citric acid** | **Level of browning** |
| 1 | - | 2 | 2 | 1 | 1 |
| 2 | - | 4 | 2 | 1 | 1 |
| 3 | - | 6 | 2 | 1 | 3 |
| 4 | - | 2 | 4 | 1 | 1 |
| 5 | - | 4 | 4 | 1 | 3 |
| 6 | - | 6 | 4 | 1 | 5 |
| 7 | - | 2 | 6 | 1 | 3 |
| 8 | - | 4 | 6 | 1 | 5 |
| 9 | - | 6 | 6 | 1 | 5 |
| 10 | 1.5 | - | 2 | 1 | 1 |
| 11 | 1.5 | 2 | 2 | 1 | 1 |
| 12 | 1.5 | 4 | 2 | 1 | 3 |
| 13 | 1.5 | 6 | 2 | 1 | 5 |
| 14 | 1.5 | - | 4 | 1 | 1 |
| 15 | 1.5 | 2 | 4 | 1 | 3 |
| 16 | 1.5 | 4 | 4 | 1 | 5 |
| 17 | 1.5 | 6 | 4 | 1 | 5 |
| 18 | 1.5 | - | 6 | 1 | 1 |
| 19 | 1.5 | 2 | 6 | 1 | 5 |
| 20 | 1.5 | 4 | 6 | 1 | 5 |
| 21 | 1.5 | 6 | 6 | 1 | 5 |
| 22 | 1.5 | 2 | - | 1 | 1 |
| 23 | 1.5 | 4 | - | 1 | 1 |
| 24 | 1.5 | 6 | - | 1 | 3 |
| 25 | 3 | - | 2 | 1 | 1 |
| 26 | 3 | 2 | 2 | 1 | 3 |
| 27 | 3 | 4 | 2 | 1 | 5 |
| 28 | 3 | 6 | 2 | 1 | 5 |
| 29 | 3 | - | 4 | 1 | 1 |
| 30 | 3 | 2 | 4 | 1 | 5 |
| 31 | 3 | 4 | 4 | 1 | 5 |
| 32 | 3 | 6 | 4 | 1 | 5 |
| 33 | 3 | - | 6 | 1 | 1 |
| 34 | 3 | 2 | 6 | 1 | 5 |
| 35 | 3 | 4 | 6 | 1 | 5 |
| 36 | 3 | 6 | 6 | 1 | 5 |
| 37 | 3 | 2 | - | 1 | 1 |
| 38 | 3 | 4 | - | 1 | 1 |
| 39 | 3 | 6 | - | 1 | 3 |

As can be seen in Table 4, there were several combinations that displayed a positive effect against browning (assessments of 5 points). It was also observed that a matrix of modified starch used as an edible coating facilitates better support of the antioxidants on the surface of the cut product, making it possible to use a lower concentration of said compounds without them losing their effectiveness against browning. In the previous results (see Table 3) it was clearly necessary to use concentrations of 10 and 8% w/w of calcium ascorbate and sodium ascorbate respectively, to obtain potato without surface darkening. However, when these compounds were incorporated in a solution of modified starch at 1.5 or at 3% w/w, it was not necessary to use high concentration of both antioxidants to obtain good results against browning.

With these results, it was confirmed that a coating of hydroxypropylated distarch phosphate is an effective matrix as a carrier of antioxidants, keeping them fixed on the surface of the potato, which is where the reactions of browning start, and therefore making it possible to use a smaller amount of antioxidants, which by themselves have a limited effect against darkening of potato.

Although many formulations gave good results against browning, the generation and accumulation of liquid was observed in some samples. The following example shows, more generally, the effect of the coating on the quality of cut potato stored for 10 days.

### - Example 4. Effect of using an edible coating based on modified starch on the quality of sticks of fourth range potatoes during storage

In order to confirm the effectiveness of the edible coatings that gave best results in the preceding example, the useful life of the coated potato was assessed during 10 days of storage under refrigeration.

For this, and by way of an example, not in any way limiting, various solutions of edible coatings were prepared, consisting of modified starch (hydroxypropylated distarch phosphate), sodium ascorbate, calcium ascorbate and citric acid in various proportions: (A), (B), (C), (D), (E) and (F). In addition, a mixture of the antioxidants sodium ascorbate and calcium ascorbate was used, without modified starch, for comparative purposes, including (G) or not including (H) citric acid, as well as the use of a single coating of hydroxypropylated distarch phosphate at (I) 1.5% w/w and (J) 3% w/w. In any of the cases, the ingredients were first mixed in powder form and then dissolved in water, stirring continuously until completely dissolved, with the temperature, both of the water and of the solution, being maintained at 4°C until it was used as coating agent.

The various test formulations are summarized below in Table 5:

**Table 5: Formulations used for verifying the effect of the edible coating on the quality of sticks of fourth range potatoes during storage**

| **Formulation** | **Ingredients (% w/w)** | | | |
|---|---|---|---|---|
| | **Modified starch** | **Sodium ascorbate** | **Calcium ascorbate** | **Citric acid** |
| A | 1.5 | 6 | 2 | 1 |
| B | 1.5 | 4 | 4 | 1 |
| C | 1.5 | 2 | 6 | 1 |
| D | 3 | 6 | 2 | 1 |
| E | 3 | 2 | 4 | 1 |
| F | 3 | 2 | 6 | 1 |
| G | - | 6 | 4 | 1 |
| H | - | 6 | 4 | - |
| I | 1.5 | - | - | - |
| J | 3 | - | - | - |

Once the various formulations had been prepared, they were used for coating potatoes of the Agria variety, which were washed on the surface, peeled, cut into sticks and finally washed. Once the sticks were obtained, they were immersed in each of the solutions for 1 minute. In the case of the control sample (K), the potato sticks were immersed in cold water for the same length of time. After this, the samples were drained for 1 minute to remove any excess solution left on the surface of the product. Finally the potato sticks were packed manually in plastic bags (PP), without using modified atmosphere, and stored at 4°C for 10 days. 6 bags of 200g of potato sticks were packed per treatment.

A sensory evaluation of the product was undertaken for assessing the effect of the various coating formulations. The assessment scale was from 1 to 10, 10 being the best score available for the parameter assessed, i.e. a product with the same quality as the recently cut potato, and 1 being a product of very poor quality (unacceptable). The parameters assessed during the 10 days of storage were color (10 being complete absence of browning), odor (10 being absence of bad odors), hydration (10 being complete hydration of the surface of the product), accumulation of liquid in the packaging (10 being absence of liquid in the packaging), as well as the general appearance of the potato during storage (10 being a product with good sensory quality).

The effect of an edible coating consisting of a mixture of modified starch with antioxidants in various proportions can be seen in the following table:

**Table 6. Effect of using edible coatings for maintaining the quality of sticks of fourth range potatoes during storage**

| ***Formulation*** | ***Days of storage*** | ***Color*** | ***Odor*** | ***Hydration*** | ***Absence of liquid*** | ***General appearance*** |
|---|---|---|---|---|---|---|
| A | 5 | 10 | 10 | 9 | 7 | Good but accumulation of liquid in the packaging. |
| | 10 | 10 | 8 | 8 | 6 | Good but accumulation of liquid in the packaging. |
| B | 5 | 10 | 10 | 9 | 10 | Good |
| | 10 | 10 | 9 | 8 | 10 | Good |
| C | 5 | 10 | 10 | 9 | 7 | Good but accumulation of liquid in the packaging. |
| | 10 | 10 | 8 | 7 | 7 | Good but accumulation of liquid in the packaging. |
| D | 5 | 10 | 10 | 10 | 8 | Good but slight accumulation of liquid |
| | 10 | 10 | 9 | 10 | 8 | in the packaging. Good but slight accumulation of liquid in the packaging. |
| E | 5 | 10 | 10 | 10 | 10 | Good |
| | 10 | 10 | 9 | 10 | 10 | Good |
| F | 5 | 10 | 10 | 10 | 10 | Good |
| | 10 | 10 | 9 | 10 | 10 | Good |
| G | 5 | 8 | 10 | 6 | 6 | Good color but accumulation of liquid in the bag and start of dehydration. |
| | 10 | 8 | 9 | 5 | 5 | Good color. Product with liquid and slight dehydration. |
| H | 5 | 9 | 10 | 5 | 5 | Good color but accumulation of liquid in the bag and start of dehydration. |
| | 10 | 7 | 9 | 5 | 4 | Start of browning. Product with liquid and slight dehydration. |
| I | 5 | 6 | 8 | 7 | 10 | Browned product. |
| | 10 | 2 | 6 | 5 | 10 | Browned product, with start of dehydration. |
| J | 5 | 5 | 8 | 8 | 10 | Browned product. |
| | 10 | 2 | 6 | 6 | 10 | Browned product, with start of dehydration. |
| K | 5 | 3 | 6 | 5 | 10 | Browning and superficial dehydration. |
| | 10 | 1 | 4 | 1 | 10 | Product with very poor visual quality. |

As can be seen in Table 6, there is a synergistic effect between the various components used in the formulation of the various edible coatings used in this example. It was observed that the sensory quality of the potato sticks was maintained for 10 days of storage when formulations B, E and F were used.

In general, the absence of brownish coloration on the surface of the potato sticks, as well as their surface hydration being maintained, were two of the most obvious quality characteristics for the product coated with said formulations. Moreover, no accumulation of liquid in the packaging was observed, nor presence of undesirable odors at the end of storage. For their part, formulations A, C and D kept the potatoes free from browning, but caused appreciable accumulation of liquid in the packaging that affected the quality of the product significantly after 10 days of storage.

The combined use of calcium ascorbate and sodium ascorbate, without the presence of starch in the formulation (with or without citric acid), prevented enzymatic browning of the potato sticks, mainly in the first days of storage, but their effectiveness gradually decreased during storage. In those cases where the coating consisted solely of starch, accelerated darkening of the samples was observed after processing, with the first signs of browning appearing within a few hours of storage.

Table 6 also shows a marked deterioration of the untreated potato sticks (K) starting from the first day of storage, the presence of browning being the first sign of loss of quality to be observed.

### - Example 5. Effect of applying an edible coating of modified potato starch on the useful life of fourth range potatoes

The following example made it possible to compare the effect of an edible coating based on modified potato starch with the use of a bath of metabisulfite as a protective treatment, on the useful life of fourth range potatoes.

For this, by way of an example, which is not in any way limiting, an edible coating was prepared consisting of a mixture of potato starch: hydroxypropylated distarch phosphate (3% w/w), calcium ascorbate at 6% w/w, sodium ascorbate at 2% w/w and citric acid at 1% w/w. For this, the following were dissolved in a liter of water: 34.09 g of hydroxypropylated distarch phosphate, 22.73 g of sodium ascorbate, 68.18 g of calcium ascorbate and 11.36 g of citric acid. This solution was prepared in cold water (4°C) using a stirring system until completely dissolved, and stored at the same temperature until application.

Once the edible coating had been prepared, it was applied on potatoes of the Agria variety, which had previously been washed, peeled, and cut into sticks. Once the sticks were obtained, they were treated by immersion in the coating bath for 2 minutes, and then the excess solution was removed. Finally, the coated potatoes were packed in polypropylene bags and stored at 4°C for 10 days. For comparison, samples of potato sticks were also prepared, treated with a solution of sodium metabisulfite - SMB (3% w/w), which is the treatment usually employed in the potato processing industry for preventing enzymatic browning. Finally, control samples were prepared, which were prepared and stored in the same way as mentioned above, but replacing the bath of edible coating with a water bath at 4°C.

The quality characteristics of the coated potato sticks were determined throughout the period of storage by means of sensory assessments. The color changes, odor, dehydration and presence of exudates were the main parameters evaluated. An assessment scale from 1 to 10 was established, 10 being the best score for the quality parameter evaluated, i.e. the same quality as the recently cut product, and 1 being a product of low quality. The results are summarized below in Table 7.

**Table 7. Variation of the useful life of sticks of fourth range potatoes by using an edible coating**

| **Sample** | **Days of storage** | | **Parameters evaluated** | | |
|---|---|---|---|---|---|
| | | **Color** | **Odor** | **Surface hydration** | **Absence of exudates** |
| Potatoes with edible coating | 1 | 10 | 10 | 10 | 9 |
| | 5 | 10 | 10 | 10 | 10 |
| | 10 | 10 | 9 | 10 | 10 |
| Potatoes without coating (Control) | 1 | 5 | 10 | 7 | 10 |
| | 5 | 1 | 8 | 5 | 10 |
| | 10 | 1 | 7 | 2 | 10 |
| Potatoes with SMB | 1 | 10 | 10 | 9 | 8 |
| | 5 | 10 | 5 | 5 | 5 |
| | 10 | 10 | 1 | 3 | 5 |

The light yellow color of the potato sticks was one of the main sensory characteristics preserved in the product, which was free from dark coloration (browning) throughout the 10 days of storage. In addition to the color, the surface hydration of the potato sticks was also preserved throughout the storage time, in contrast to the control samples and the samples with SMB, where the signs of dehydration were obvious, as can be seen in Table 5.

The odor generated in the packaging of fourth range potato is also a determining factor for establishing its commercial life. In the case of the coated potatoes, there were hardly any odors different from natural potato, but a strong sulfurous odor was noticed in the bags that contained potato sticks treated with SMB. Moreover, the presence of exudates in the bag during storage was only appreciable in the coated product during the first day of storage. The small amount of liquid accumulated was quickly reabsorbed and was no longer present during the rest of storage.

## Claims

1. A composition for coating portions of peeled and cut potato, **characterized in that** it is in the form of an aqueous solution that comprises the following components:
| | |
|---|---|
| Modified potato starch | 0.1-10% w/w |
| Sodium ascorbate | 0.5-15% w/w |
| Calcium ascorbate | 0.1-12% w/w |
| Citric acid | 0.05-2% w/w |

2. The composition as claimed in claim 1, in which the modified potato starch is pregelatinized.

3. The composition as claimed in claim 1 or 2, in which the modified potato starch is selected from the group of starch modified by crosslinking, modified by substitution with formation of esters or ethers or with both types of modifications.

4. The composition as claimed in any one of claims 1 to 3, in which the modified potato starch is distarch phosphate.

5. The composition as claimed in claim 4, in which the distarch phosphate is at a concentration of 10% w/w.

6. The composition as claimed in any one of claims 1 to 3, in which the modified potato starch is starch modified by crosslinking and by substitution.

7. The composition as claimed in claim 6, in which the modified potato starch is hydroxypropylated distarch phosphate.

8. The composition as claimed in claim 6 or 7, in which the modified potato starch is at a concentration of 0.5-5% w/w.

9. The composition as claimed in claim 8, which comprises:
| | |
|---|---|
| Pregelatinized modified potato starch | 0.5-5% w/w |
| Sodium ascorbate | 2-12% w/w |
| Calcium ascorbate | 2-12% w/w |
| Citric acid | 0.5-2% w/w |

10. The composition as claimed in any one of claims 6 to 9, in which the modified potato starch is at a concentration of 1-4% w/w.

11. The composition as claimed in claim 10, in which the concentrations of other components of the composition are:
| | |
|---|---|
| Sodium ascorbate | 2-6% w/w |
| Calcium ascorbate | 2-6% w/w |
| Citric acid | 1% w/w |

12. The composition as claimed in claim 11, in which the modified potato starch is at a concentration of 1.5-3% w/w.

13. The composition as claimed in claim 12, in which
a. the concentration of modified potato starch is 1.5% and
i) if one of the components of the pair of sodium ascorbate and calcium ascorbate is at a concentration of 2% w/w, the other component is at a concentration of 6% w/w, or
ii) if one of the components of the pair of sodium ascorbate and calcium ascorbate is at a concentration of 4% w/w, the other component is at a concentration of at least 4% w/w,
or,
b. the concentration of modified potato starch is 3%, and if one of the components of the pair of sodium ascorbate and calcium ascorbate is at a concentration of 2% w/w, the other component is at a concentration of at least 4% w/w.

14. The composition as claimed in claim 13, which is selected from the group of compositions comprising:
a) pregelatinized modified potato starch at 1.5% w/w, sodium ascorbate at 4% w/w, calcium ascorbate at 4% w/w and citric acid at 1% w/w;
b) pregelatinized modified potato starch at 3% w/w, sodium ascorbate at 2% w/w, calcium ascorbate at 4% w/w and citric acid at 1% w/w; or
c) pregelatinized modified potato starch at 3% w/w, sodium ascorbate at 2% w/w, calcium ascorbate at 6% w/w and citric acid at 1% w/w.

15. A method for preparing a commercial product of fourth range potato that comprises the steps of;
a) immersing the portions of peeled and cut potato in an aqueous coating solution that corresponds to the formulation of the composition of any one of claims 1 to 14;
b) removing the excess aqueous solution.

16. The method as claimed in claim 15, in which the modified starch that forms part of the coating solution is non-pregelatinized modified starch and the method comprises a preliminary step for preparing the aqueous coating solution in which the modified starch is dissolved in water, is gelatinized by heating and is left to cool to room temperature, or to a lower temperature, above 0°C, and is then mixed with the remaining components of the composition to obtain the aqueous coating solution.

17. The method as claimed in claim 15, in which the modified starch that forms part of the aqueous coating solution is pregelatinized modified starch and the method comprises a preliminary step for preparing the aqueous coating solution in which its components are mixed directly in water, at room temperature or at a lower temperature, greater than or equal to 0°C.

18. The method as claimed in any one of claims 15 to 17, in which the portions of peeled and cut potato are washed to remove the excess starch before step a) and after being cut.

19. The method as claimed in any one of claims 15 to 18, in which the peeled potatoes are washed before being cut.

20. The method as claimed in any one of claims 18 or 19, in which the potatoes and/or the portions thereof are washed with mains water.

21. The method as claimed in any one of claims 15 to 20, in which step b) is carried out by a process of draining in a system of grids, by vibration or by means of a forced-air suction system.

22. The method as claimed in any one of claims 15 to 21, in which step a) is applied for 1 minute.

23. The method as claimed in any one of claims 15 to 22, which comprises a step in which the potato portions are packed after undergoing steps a) and b) and, optionally, after a selection step following step b).

24. The method as claimed in claim 23, in which the potato portions are kept under refrigeration after packing.

25. The method as claimed in either of claims 23 or 24, in which the potato portions are packed in plastic bags.

26. The method as claimed in claim 25, in which the plastic bags are made of polypropylene (PP).

27. The method as claimed in any one of claims 23 to 26, in which a modified atmosphere is not used during packing.

28. A commercial product of fourth range potato obtained by a method of any one of claims 15 to 27.
